# EUROPEAN PATENT SPECIFICATION

(11) **EP 1 200 713 B1**
(45) Date of publication and mention of the grant of the patent: **22.03.2006**
(21) Application number: 00949466.7
(22) Date of filing: 07.08.2000
(51) Int. Cl.: F01D 17/16

(54) **TURBINE GUIDE VANE FOR EXHAUST GAS TURBOCHARGER**
LEITSCHAUFEL FÜR EINE ABGASTURBOLADERTURBINE
AUBE DIRECTRICE DE TURBINE POUR TURBOCOMPRESSEUR DE GAZ D'ECHAPPEMENT

(30) Priority: 05.08.1999 DE 19936507
(43) Date of publication of application: 02.05.2002
(73) Proprietor: BorgWarner Inc., Auburn Hills MI 48326 (US)
(72) Inventor: JAISLE, Jens-Wolf, D-70597 Stuttgart (DE)
(74) Representative: Patentanwälte Westphal, Mussgnug & Partner
(86) International application number: PCT/EP2000/007637
(87) International publication number: WO 2001/011197

(56) References cited:
- EP-A- 0 056 569
- DE-B- 1 096 536
- US-A- 2 797 858
- US-A- 4 534 699
- US-A- 4 642 026

## Description

### Field of the Invention

The invention relates to an exhaust gas turbocharger for an internal combustion engine, with components redesigned to be simple in shape and economical to produce without however showing any noticeable reduction in performance as compared to turbochargers constructed with components of conventional design.

### Background of the Invention

The power output of an internal combustion engine is proportional to the combustion air throughput and the combustion air density. Turbochargers are used to increase combustion air throughput and density, thereby increasing engine power and responsiveness.

Briefly, a turbocharger comprises two impellers connected by a common shaft, each impeller capable of rotating within its own cavity within a turbocharger housing. On the exhaust turbine side, the kinetic energy from exhaust gases is used to drive the turbine impeller. The turbine impeller in turn drives the compressor impeller. The compressor draws in and compresses ambient air, increasing the flow of combustion air into the engine.

Exhaust gas turbine impellers are generally of the impulse type, wherein the speed of rotation depends upon the speed impingement of the exhaust gas. Conventionally, nozzles are provided just before turbine blades to increase the speed of the exhaust gas as it expands from a high pressure area of the nozzle to a low pressure area. The nozzles also serve to direct the flow of the exhaust gas so that it will optimally impinge on the face of the turbine blades. Finally, nozzles are designed to minimize introduction of turbulence.

For use with internal combustion engines, the turbocharger must be designed in terms of impeller volutes and impeller blade orientation to best match the requirements of the engine over its entire range of speeds. With a conventional turbocharger of a fixed geometry design, such a match will necessarily be a compromise of the best performance possible at various engine speeds and torques.

More recently, variable pitch vanes have been developed for use in variable geometry turbochargers (VGT). Examples are provided in US-A-2,797,858 and US-A-4,642,026. Guide vanes are arranged in a ring around the turbine impeller, with the space between the guide vanes defining nozzles. Each blade is mounted on a shaft, each shaft is rotated about its own longitudinal axis, whereby the angle of attack of the blade, and thus the angle at which exhaust gas is directed onto the turbine blades by the inlet guide vanes, is changed. A change in the guide vane orientation also brings about a change the nozzle geometry. An optimal position for the inlet guide vanes at any point in time is determined from a combination of desired torque response, fuel economy, and emissions requirements. For example, at high speed low torque highway cruising, little or no boost is preferred for optimal fuel economy. For rapid acceleration, high boost is desired, regardless of engine speed.

Adjustable (i.e., rotatable) guide vanes thus serve three functions: (1) they provide control surfaces for changing the direction of flow of the exhaust gas, (2) they provide a gating mechanism for restricting or de-restricting the exhaust gas flow-through, and (3) they define in the intermediate space between adjacent guide vanes a nozzle for accelerating the flow of exhaust gas prior to impinging upon the impulse turbine rotor.

The portion of the adjustable guide vane in direct contact with the exhaust gas is referred to as the airfoil. For obvious aerodynamic reasons, the design of the airfoil is similar to the wing of an airplane, with a bulbous leading edge and a tapered trailing edge. Camber and aspect ratio of the airfoil are selected for maximum effectiveness at different angles of attack. Each airfoil design is effective over a range of angles of attack, beyond which the airfoil looses effectiveness and merely introduces turbulence. The flatter (i.e., less camber) the airfoil, the narrower the effective range of angles of attack. The airfoil can be generally curved, as shown in US Patent 4,726,744 (Arnold), or it can be generally straight, as shown in US Patents 4,582,466 (Szczupak) and 5,518,365 (Baets et al).

In each case, the adjustable guide vane is produced by a method such as casting (Baets et al col. 3 line 7) or powder metallurgy (Arnold col. 3, line 64). These manufacturing techniques, while expensive, are believed important to providing the optimal design of the airfoil (in terms of defining in the intermediate space a nozzle for optimal velocity increase, laminar flow, and minimization of turbulence).

As discussed above, the increased efficiency of the variable geometry turbine (VGT) is associated with an increase in the complexity and manufacturing cost of the turbochargers. There would be a significant commercial advantage if a VGT could be constructed at a reduced cost, without however any noticeable reduction in performance characteristics. Given the constraints in guide vane design according to the conventional wisdom, this seems to be a considerable challenge.

### Summary of the Invention

It is the task of the present invention to provide an exhaust gas turbocharger for an internal combustion engine, with components redesigned to be simple in shape and economical to produce without however showing any noticeable reduction in performance as compared to turbochargers constructed with components of conventional design.

For the above-described reasons, the inventors investigated various parts of the turbocharger. The guide vanes, which represent approximately 30-50% of the exhaust gas turbine manufacturing cost, were selected as the initial target of investigation.

In their attempts to investigate the most basic laws of turbocharger airflows, and to understand the scientific reasons as to why airfoils must be of a certain aerodynamic "teardrop" design, the inventors constructed a series of airfoils with a series of fundamental shapes, and tested their performance in variable geometry turbochargers.

To their surprise, simple airfoils with parallel major surfaces, and with slanted trailing surfaces, worked almost as efficiently as the airfoils of conventional "teardrop" design. The inventors thereupon immediately realized that if the airfoil part of the turbocharger could be made with parallel major surfaces, then the airfoil could be made of a basic material, e.g., sheet metal, and that the expensive casting or powder metallurgy manufacturing processes, which had been thought to be the most economical way to provide the indispensable teardrop design, could in fact be dispensed with.

The sheet metal airfoil can be connected to a shaft by gas welding, laser welding, bolting, or any way. Production by these means is extremely cost effective, since the individual strips of sheet metal can simply be cut from bar stock. It was estimated that in a typical manufacturing run, the unit price per guide vane (manufacturing plus materials could be reduced by an estimated 50-70 %. This represents a significant economical advantage over the conventional manufacturing process.

Accordingly, the task of the present invention is surprisingly solved by providing a gas turbine with guide vanes of which the airfoil part has parallel major surfaces, and which preferably has a simple trapezoid or parallelogram design.

The task is further solved by a manufacturing process wherein exhaust gas turbine airfoils are simply made of sheet metal, such as bar stock, with at least the trailing edge angled.

That is, it is the essential characteristic of the invention that the major surfaces of the airfoil are parallel.

It is a further characteristic of the invention that the trailing edge, at least, it angled to introduce some taper, using a simple and economical means such as milling. Depending upon the milling technique used, the taper is preferably provided by a one-pass milling-grinding, such that the taper is a single angled surface. The taper could however also be provided with multiple surfaces by using multiple milling passes. However, as the task of the invention is cost reduction, multiple passes are less preferred, since introduction of complexity into the manufacturing process introduces an increase in manufacturing cost without a corresponding improvement in turbocharger performance.

The characterizing feature of the invention is that the airfoil has parallel major surfaces, thus is simple in design and does not require casting or powder metallurgy.

### Brief Description of the Drawings

The invention is now explained in greater detail by reference to the drawings, wherein:
Fig. 1a shows the basic turbine guide vane design of the invention in top view, with the airfoil being a parallelogram,
Fig. 1b shows the guide vane of the invention in side view,
Figs. 2a and 2b correspond to Figs. 1 a and b, differing only in the direction of slant of the leading and trailing surfaces,
Fig. 3a shows the basic turbine guide vane design of the invention in top view, with the airfoil being a trapezoid,
Fig. 3b shows the guide vane of the invention in side view,
Figs. 4a and 4b correspond to Figs. 3 a and b, differing only in the direction of slant of the leading and trailing surfaces,
Fig. 5 shows an airfoil without shaft, which in side view trapezoidal in shape,
Fig. 6 shows an airfoil without shaft, which in side view is a parallelogram,
Fig. 7 shows an elevated perspective view of a segment of a conventional airfoil.
Fig. 8 shows a cross section through the conventional airfoil of Fig. 7, further showing rotation axis.
Fig. 9 is a plot of the exhaust gas throughput vs. expansion ratios for a conventional turbine guide vane (Fig. 7 and 8) and the four basic turbine guide vanes of the present invention (Figs. 1-4 = A-D), showing no difference at 40% and 60% angles of attack, and showing significant differences a max and minimum angles of attack.
Fig. 10 is a graph comparing the turbine efficiency depending on the exhaust gas throughput for a conventional turbine guide vane (teardrop design as shown in Figs. 7-8) and the four basic turbine guide vanes according to the present invention.
Fig. 11 explains the boundary conditions of the performed cycle test in table form.
Figs. 12-15 show exhaust gas flow-through for the four major airfoil designs of the present invention, with the airfoils directing exhaust gas onto the exhaust gas impeller.
Fig. 16 shows exhaust gas flow-through restriction.

### Detailed Discussion of the Invention

It is well known that one of the most expensive components of a turbocharger, particularly in a variable geometry turbine, is the "teardrop" shaped airfoil of the guide vane. This high cost is based in part on the method of manufacture. In order to find out what design aspects of the conventional "teardrop" shaped airfoil are important, the inventor experiment with various fundamental designs of guide vanes. It has surprisingly been determined that the same turbine effectiveness can be achieved even with an essentially simplified profile, and that this simplified profile can be made using readily available sheet metal or bar stock. Thereby, the expensive casting process can be avoided.

The connection between airfoil and shaft can be produced using welding according to the well-known tungsten invert gas process, or by laser welding, or bolting, or any well-known technique. Airfoils are preferably made using the material PM 2000 (product of Plansee, Germany). This material satisfies the important criteria of corrosion resistance at high temperatures. Besides this, it is easily welded. Further, PM 2000 has a lower thermal coefficient of expansion (between 11 * 10⁻⁶ [1/°K] und 15 * 10⁻⁶ [1/°K]) than the conventional metals used in the steel casting process (between 16 * 10⁻⁶ [1/°K] und 18,5 * 10⁻⁶ [1/°K]). Thereby the point at which the guide vanes jam in the turbine housing is shifted to higher temperatures.

In accordance with the present invention, the longitudinal cross-section of the airfoil part of the guide vane has four surfaces:
(1) leading surface;
(2) trailing surface;
(3) impeller-directing major surface; and
(4) restricting major surface.

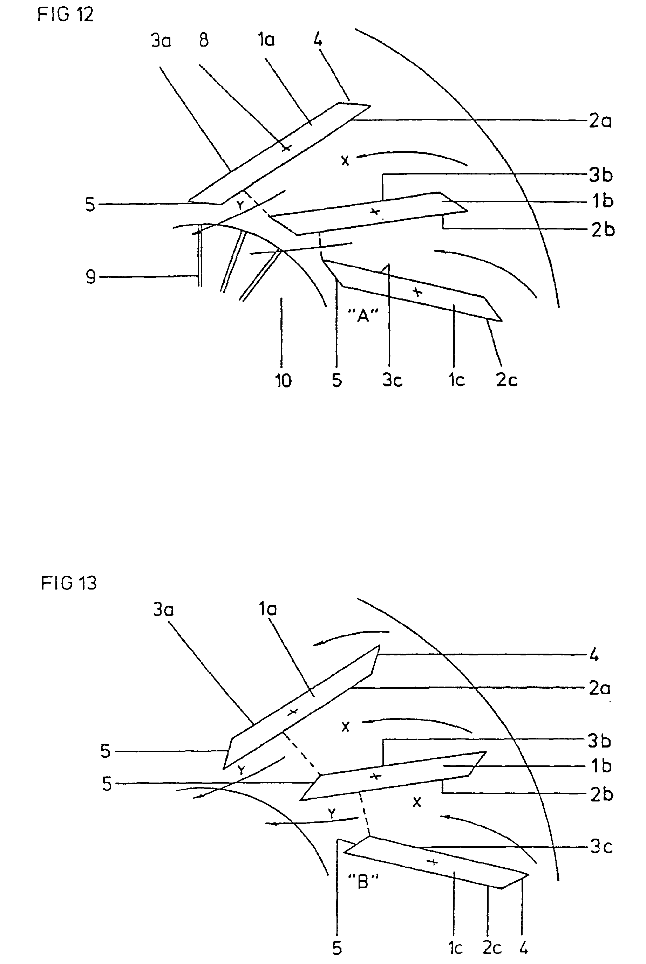

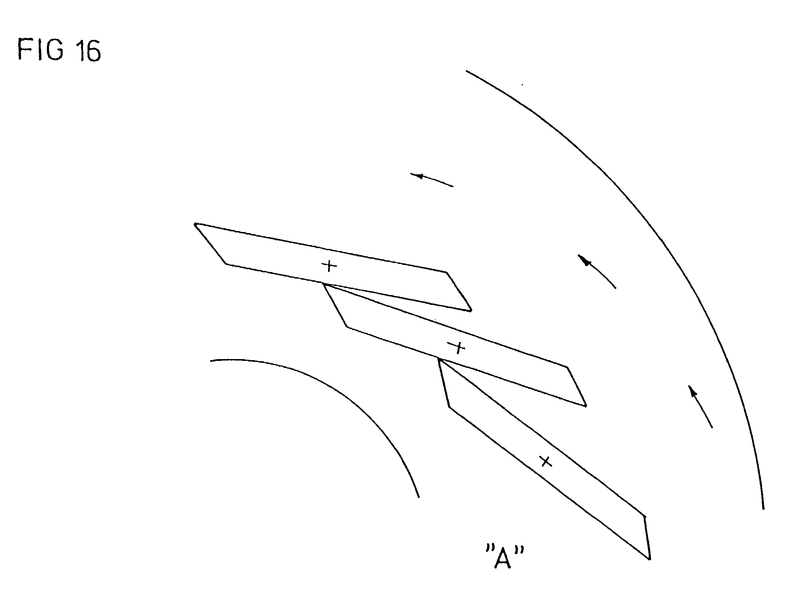

The terms "impeller-directing surface" and "restricting surface" are used herein for convenience when referring to the two major surfaces. The "impeller-directing surface" is the surface which is impinged by exhaust gas and deflects the exhaust gas towards the impeller during maximum deflection (see Figs. 12-15). The "restricting surface" is the surface which restricts or blocks airflow when the guide vanes are used to restrict airflow through the gas turbine (see Fig. 16). Thus, in Figs. 12-15 the working surface performs most of the work with regard to redirecting the airflow, and in Fig. 16 the restricting surface performs most of the work. There is obviously a point between the orientation shown in Figs. 12-15 and the orientation shown in Fig. 16 at which the guide vanes neither restrict nor actively deflect, i.e., a point at which no work is done. This is the point of maximum airflow (but not necessarily the point at which the maximum impeller RPM are reached, as this would depend upon exhaust gas flow rate through the nozzles, which in turn depends upon pressure drop, which is dependent upon backup gas pressure between the engine and exhaust gas turbine. As the nozzles form a constriction, the flow of gas is initially temporarily reduced. As the exhaust gas pressure rapidly builds in the channel between the engine and turbine, the pressure differential between the backup pressure and ambient pressure increases, i.e., the pressure drop increases. At the same time, the compressed exhaust gas, flowing from a narrower area in the nozzle to a wider area, expands and at the same time accelerates, hitting the impeller blades with increased kinetic energy (and less thermal energy).

In Figs. 12-15 both major surfaces, that is, both the impeller directing and the restricting surfaces, define a nozzle in the area between adjacent airfoils which, as shown in Figs. 12-15, is used to accelerate exhaust gas flow and to direct the exhaust gas flow onto the impeller.

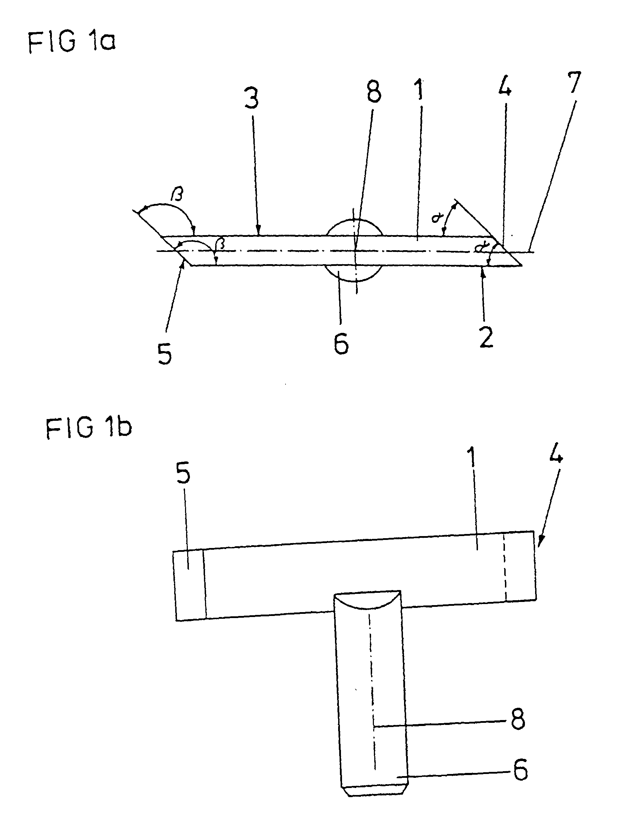

Turning now to the figures, Fig. la is a top view of a simple guide vane with airfoil **1** mounted on a shaft **6.** In this figure the exhaust gas flows from left to right. The airfoil has an impeller-directing surface **2,** a restricting surface **3,** a leading edge **4,** and a trailing edge **5.** As shown in Fig. 1a, the guide vane is planar and has longitudinal axis 7.

The essential aspect of the invention is that the impeller-directing surface **2** and the restricting surface **3** are parallel to each other, which is a departure from the conventional "teardrop" shape wherein these surfaces converge and were not parallel to each other.

The guide vane is rotatable about the axis **8** of the shaft **6.** By rotation, the guide vanes change in function between impeller-directing and restricting. Further, the angle at which the exhaust gas is directed onto the impeller is changed.

As shown in Fig. 1a, the leading edge **4** forms an angle α to the impeller-directing surface **2.** This angle α in Fig. 1a is 15° to about 70°, preferably 17° to 40°, most preferably about 20°. The trailing edge **5** forms an angle β to the impeller-directing surface **2.** This angle β in Fig. 1a is about 165° to about 110°, preferably about 163° to about 140°, most preferably about 160°.

The shaft is seated in the impeller housing and connected to means for controlling orientation. Such means are well known and are disclosed in, e.g., US Patent 4,726,749. This control means does not form part of the present invention and accordingly is not discussed herein in greater detail.

As shown in part in Fig. 12, (see also US Patent 4,726,744 Fig. 1), air foils **1** are arranged in a ring for directing exhaust gas (shown with arrows) onto the impeller blades **9** of a turbine impeller **10,** with the spaces between the guide vanes defining nozzles. Each airfoil is mounted on a shaft (not shown), each shaft is rotatable about its own longitudinal axis **8,** whereby the angle of attack of the airfoil, and thus the angle at which exhaust gas is directed onto the turbine blades by the inlet guide vanes, is changed. A change in the guide vane orientation also brings about a change the nozzle geometry. An optimal position for the inlet guide vanes at any point in time is determined from a combination of desired torque response, fuel economy, and emissions requirements. For very operating state of the internal combustion engine, there is an economical turbine geometry, that is, a guide vane position, providing for a specific gas admission flow cross-section, which results in a charge air flow volume providing for minimum fuel consumption of the internal combustion engine. The gas flow admission cross-section is reduced with increasing power output so that, with a correspondingly increased compressor power output, the charge air pressure and, consequently, the charge air mass flow to the internal combustion engine are adapted to the respective state of operation.

For example, at high speed low torque highway cruising, little or no boost is preferred for optimal fuel economy, and in such a condition the airfoils are oriented as shown in Fig. 16, with the restricting surfaces **3** of the airfoils restricting the flow of exhaust gas onto exhaust gas turbine impeller, thus restricting boost and lowering horsepower and, likewise, gas consumption, while cruising. For rapid acceleration, wherein high boost is desired regardless of engine speed, the guide vanes assume the orientation shown in Fig. 12, whereby exhaust gas is accelerated and directed onto the impeller blades, maximizing intake air flow and compression (density), thus maximizing horsepower. This uneconomical high-performance geometry is maintained only as long as necessary (i.e., only during high engine load), thereby maintaining fuel economy.

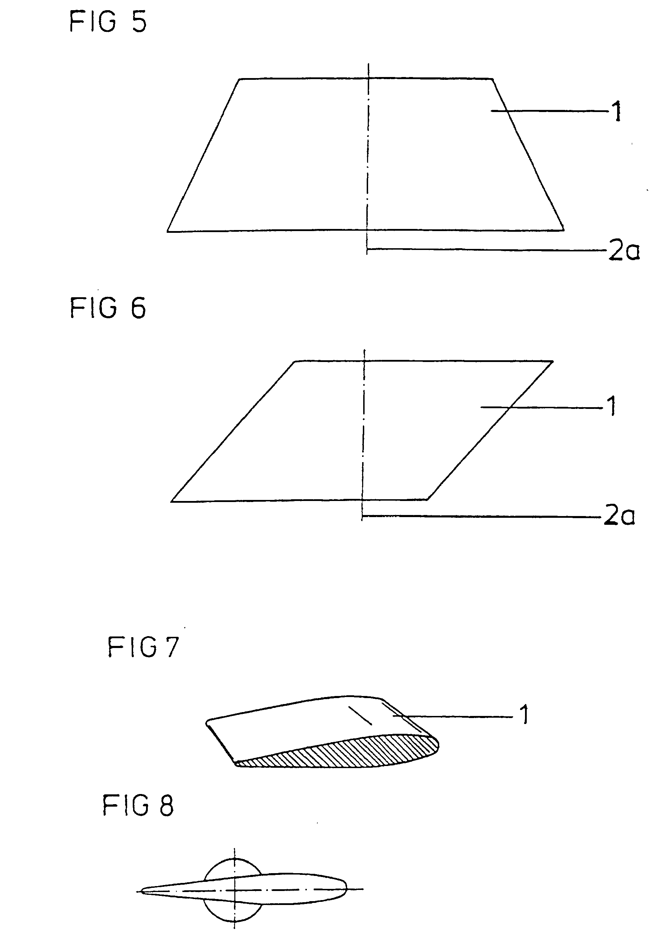

Fig. 1b is a side view of the guide vane of Fig. 1. While the airfoil is here shown to have a rectangular profile, the guide vane could just as easily have a trapezoid or parallelogram profile as shown in Figs. 5 and 6, depending upon the geometry of the exhaust gas turbine inlet housing, the outlet housing, and the shape of the impeller blades.

The aspect ratio (length:width) of the airfoil is not particularly limited, and is preferably from about 15-5:1, more preferably from about 12-8:1, most preferably about 10-11:1. In one exemplary embodiment, the length of one of the main surfaces of the airfoil is 20 mm, and the width of the parallel surfaces is a constant 1.5 mm.

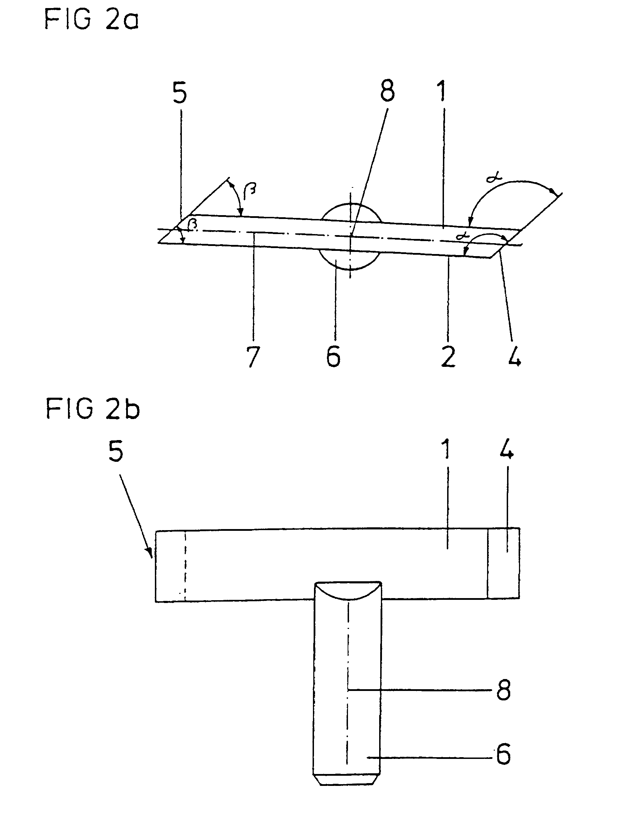

Turning now to Fig. 2a, this figure corresponds substantially to Fig. 1a, and the same reference numbers are used to refer to the same elements. The leading edge **4** forms an angle α to the impeller-directing surface **2.** The main difference between Figs. 1a and 2a is that, while in Fig. 1a angle α is 15° to about 70°, preferably 17° to 40°, most preferably about 20°, in Fig. 2a angle α is about 165° to about 110°, preferably about 163° to about 140°, most preferably about 160°. Further, the angle β of the trailing surface **5** to the impeller-directing surface 2 in Fig. 1a is about 165° to about 110°, preferably about 163° to about 140°, most preferably about 160°, while in Fig. 2a it is preferably between 15° to about 70°, preferably 17° to 40°, most preferably about 20°.

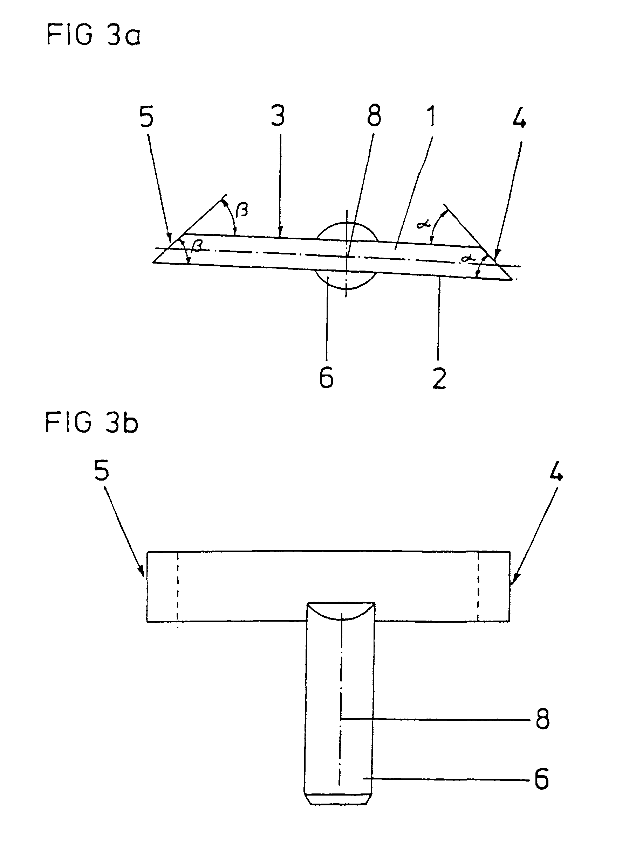

Fig. 3a corresponds substantially to Fig. 1a and 2a, and the same reference numbers are used to refer to the same elements. The leading edge **4** forms an angle α which is 15° to about 70°, preferably 17° to 40°, most preferably about 20°, to the impeller-directing surface **2**. The angle β of the trailing surface **5** to the impeller-directing surface **2** is 15° to about 70°, preferably 17° to 40°; most preferably about 20°.

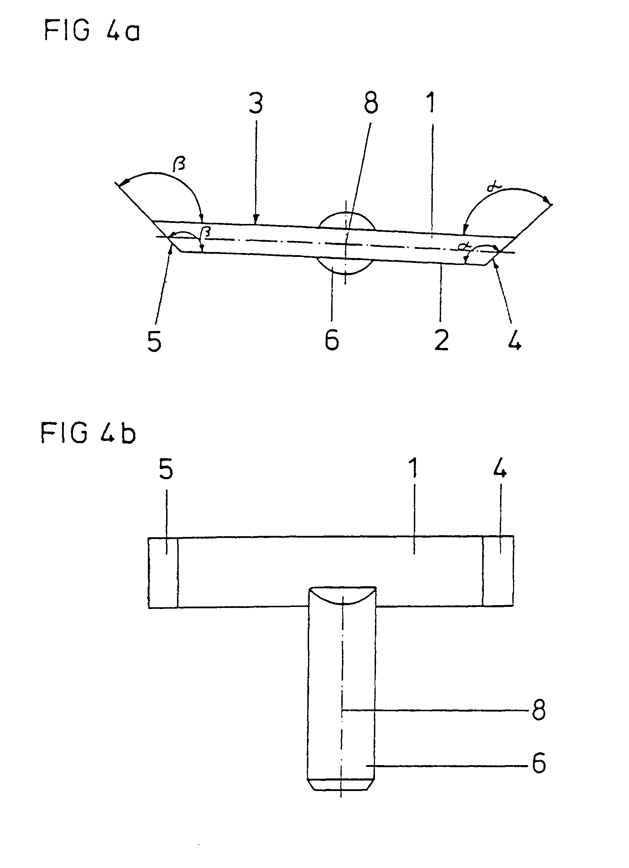

Turning finally to Fig. 4a, this figure corresponds substantially to Figs. 1a, 2a and 3a, and the same reference numbers are used to refer to the same elements. The leading edge **4** forms an angle α to the impeller-directing surface 2, with angle α is about 165° to about 110°, preferably about 163° to about 140°, most preferably about 160°. Further, the angle β of the trailing surface **5** to the impeller-directing surface 2 Fig. 1a is preferably also between about 165° to about 110°, preferably about 163° to about 140°, most preferably about 160°.

There is no correlation between angles α and β, that is, these angles need not be identical or mirror images.

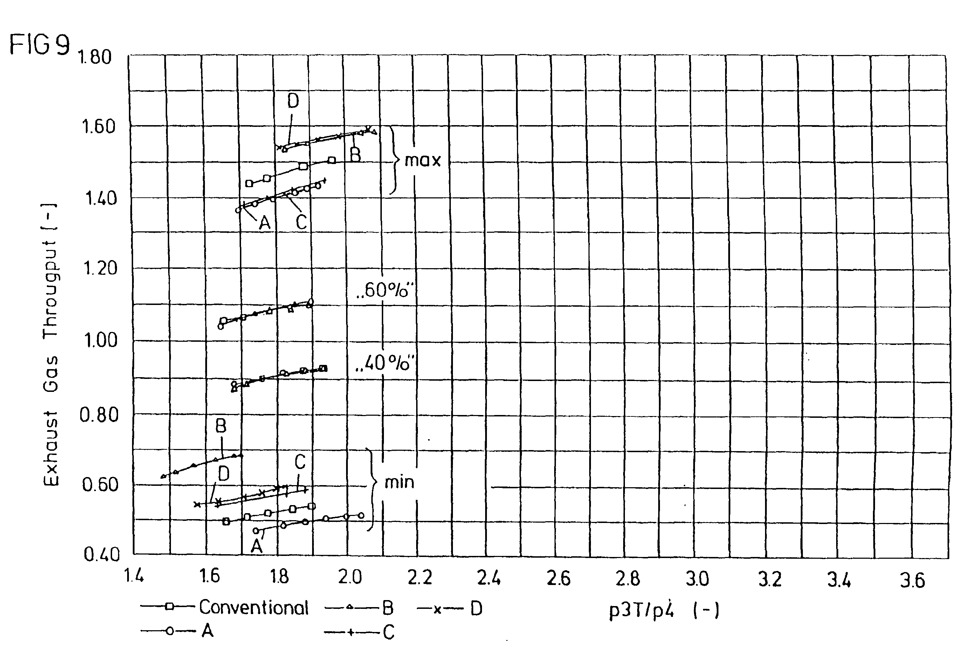

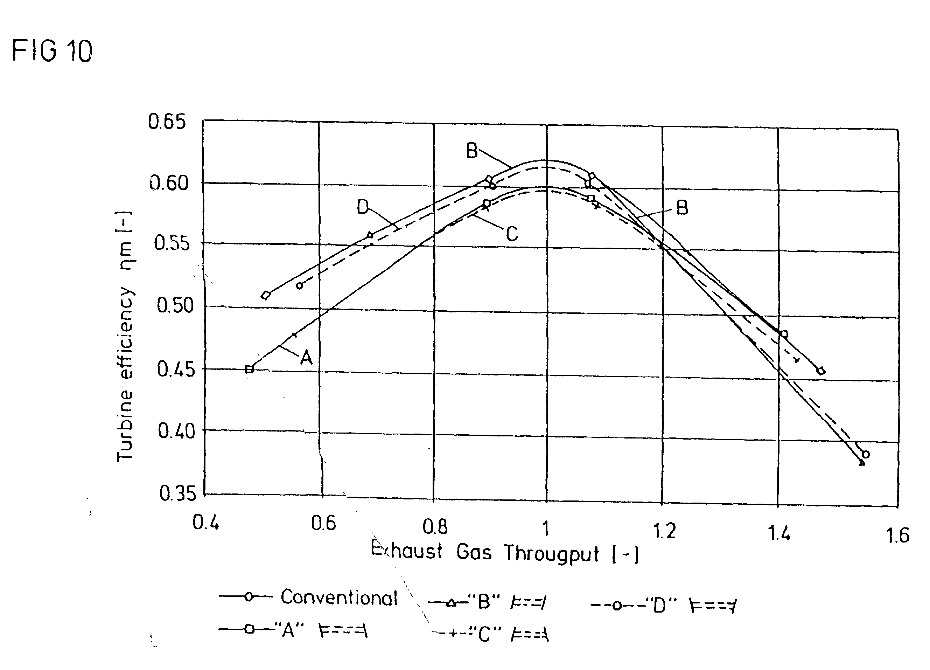

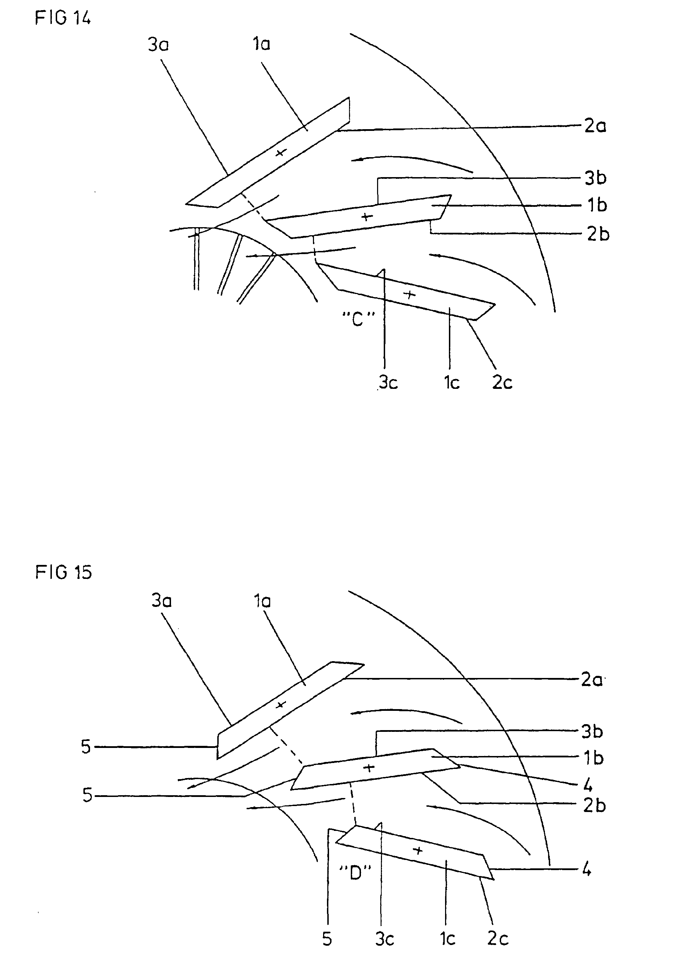

In tests, the results of which are shown in Figs. 9 and 10, these airfoil geometries produced good results, with only slight deviations from the conventional "teardrop" design and from each other. The results in terms of efficiency and gas flow-through were slightly better in the designs shown in Figs. 13 and 15 as compared to the designs shown in Figs. 12 and 14. The reason for these slight differences is not understood, but a guess might be ventured from studying Figs. 12-15.

That is, as shown in Fig. 12, the "restricting surfaces" **3b,c** of the airfoil **1b,c** form, with the opposing "impeller-directing surfaces" **2a,b** of the adjacent airfoils **1a,b** a nozzle. Exhaust gas flow through the nozzle is initially compressed in nozzle region **x,** then expands in region **y** before impacting impeller blades **9.** In Fig. 12, the region in which expansion occurs is not well defined by these surfaces, and is not in the shape of a conventional nozzle.

As shown in Fig. 13, the "restricting surfaces" **3b,c** of the airfoil **1b,c** form, with the opposing "impeller-directing surfaces" **2a,b** of the adjacent airfoils **1a,b** a nozzle. Exhaust gas flow through the nozzle is initially compressed in nozzle region **x,** then expands in region **y** before impacting impeller blades **9.** The boundary between compression and expansion is shown with dashed lines. In Fig. 13, the region in which expansion occurs is better defined, resembling the shape of the expansion section of a conventional nozzle.

Fig. 14 is similar to Fig. 12 in design of the trailing edge, and Fig. 15 is similar to Fig. 13 in design of the trailing edge. It has been determined that the design of the trailing edge is more important than the design of the leading edge, and the above theory provides one possible explanation for this result. However, more experimentation is necessary to confirm this hypothesis.

Fig. 16 shows the condition in which the guide vanes essentially form a closed cylinder, blocking exhaust gas flow through the exhaust gas turbine, whereupon this exhaust gas by-passes the exhaust gas impeller and is vented directly to the ambient air through the automobile exhaust system.

The production of the airfoil is particularly simple and cost effective as a result of the design of the airfoil in accordance with the invention. The airfoils can be cut off from a continuous strip of sheet metal. The strip of sheet metal can be unwound from a roll, whose initial part is supplied to a cutting device. The separation of the strip of sheet metal into strips of sheet metal is appropriately performed in such a way that the desired shape of the airfoil is obtained. If a airfoil is to be produced which (as seen in Fig. 6) has the shape of a parallelogram, the cutting tool is arranged in such a way that the cutting edge extends under the desired parallelogram angle with respect to the conveying direction of the strip of sheet metal. The cutting tool will be lowered during each cutting process in order to sever the strip of sheet metal. The strip of sheet metal may be stationary during the cutting process, or the cutter may move with the strip in a continuous process.

If, on the other hand, a airfoil is to be produced which is trapezoid in shape as shown in Fig. 5, it is necessary to swivel the cutting tool about an axis extending in the lowering direction between two successive cutting processes, or to use two different cutting blades.

Fig. 9 shows the comparison of the exhaust gas throughput depending on the expansion ratios of the turbine between the conventional turbine guide vane and the four examined variants.

Fig. 10 shows the comparison of the turbine efficiency η depending on the exhaust gas throughput between the conventional turbine guide vane and the four examined variants. It is observed that variant B produces the best results and is practically equivalent with the original vane.

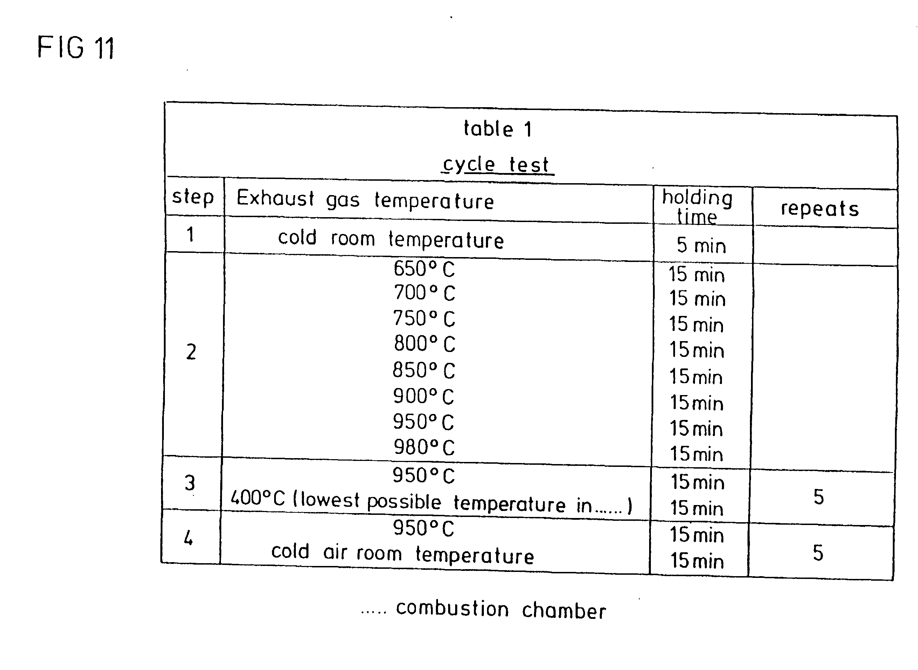

Fig. 11 illustrates the definition of the performed cycle test. The maximum temperature of 980°C in the 2^{nd} step indicates that the airfoils of sheet metal are also suitable for internal combustion engine applications.

## Claims

1. A turbine guide vane for an exhaust turbocharger, comprising:
an airfoil (1) having a leading surface (4), a trailing surface (5), and first (2) and second (3) major surfaces, wherein said first and second major surfaces are substantially planar and parallel to each other, and a shaft (6) carrying the airfoil (1),
**characterized in that** the angle (β) of the trailing surface is about 15° to about 70° relative to one of said major surfaces and about 165° to about 110° relative to the other of said major surfaces.

2. A turbine guide vane as in claim 1, wherein the angle of said trailing surface is about 17° to 40°, preferably about 20° relative to one of said major surfaces and 163° to 140°, preferably about 160° relative to the other of said major surfaces.

3. A turbine guide vane as in claim 1, wherein said trailing surface forms an angle (β) of about 15° to about 70°, preferably 17° to 40°, most preferably about 20° relative said first major surface.

4. A turbine guide vane as in claim 3, wherein said leading surface forms an angle (α) of about 165° to about 110°, preferably about 163° to about 140°, most preferably about 160° relative to said first major surface.

5. A turbine guide vane as in claim 3, wherein said leading surface forms an angle (α) of about 15° to about 70°, preferably 17° to 40°, most preferably about 20° relative to said second major surface.

6. A turbine guide vane as in claim 1, wherein said trailing surface forms and angle (β) of about 165° to about 110°, preferably about 163° to about 140°, most preferably about 160° relative said first major surface.

7. A turbine guide vane as in claim 3, wherein said leading surface forms an angle (α) of about 15° to about 70°, preferably 17° to 40°, most preferably about 20° relative to said first major surface.

8. A turbine guide vane as in claim 1, wherein the aspect ratio (length:width) of the airfoil is from about 15:1 to about 5:1.

9. A turbine guide vane as in claim 1, wherein the aspect ratio (length:width) of the airfoil is from about 12:1 to about 8:1

10. A turbine guide vane as in claim 1, wherein the aspect ratio (length:width) of the airfoil is about 10:1.

11. A turbine guide vane as in claim 1, wherein said airfoil is formed from a strip of sheet metal.

12. A turbine guide vane as in claim 1, wherein said leading and trailing surfaces are approximately parallel.

13. A turbine guide vane as in claim 1, wherein said leading and trailing surfaces are not parallel.

14. A turbine guide vane as in claim 1, wherein said leading and trailing surfaces are approximately perpendicular.

15. A turbine guide vane as in one of the preceeding claims for use in a radial-flow exhaust gas turbocharger turbine with:
an impeller (10);
a casing defining a flow duct around an impeller, and having an inlet for receiving exhaust gas from an internal combustion engine and an outlet downstream of said impeller;
a ring of guide vanes (1) disposed in the flow duct of the turbine casing, each guide vane mounted on a rotatable adjusting shaft (6) supported in the casing, and
a pivoting lever attached to each adjusting shaft to actuate rotation of the shaft.

16. A turbine guide vane as in one of the preceeding claims for use in an exhaust gas turbocharger for an internal combustion engine, said exhaust gas turbocharger comprising:
(a) a turbine having rotary blades, said rotary blades defining a cylindrical volume as they rotate;
(b) an at least partially radial-flow turbine nozzle ring comprising a plurality of circumferentially spaced guide vanes sized, shaped, and positioned to cause exhaust gas to flow therebetween in a direction, said plurality of circumferentially spaced guide vanes pivotable about an axis between a first position and a second position, the first position being a position at which the downstream edges of the guide vanes lie on said cylindrical volume defined by said rotary blades, the second position being a position at which guide vanes touch each other and air flow to the impeller is blocked by said guide vanes.

17. A method of manufacturing an exhaust gas turbocharger, wherein said method includes:
(a) obtaining a length of sheet metal;
(b) separating a segment of sheet metal from said length of sheet metal;
(c) fixing said segment of sheet metal to a shaft;
(d) introducing said shaft into a mating receptacle of a turbine casing,
wherein said segment of sheet metal forms an airfoil of a turbine guide vane as in one of the claims 1 to 15.

18. A method of manufacturing as in claim 18, wherein said sheet metal is bar stock.

19. A method as in claim 18, wherein said segment of sheet metal is attached to said shaft by gas welding, laser welding, or by mechanical means.

## Patentansprüche

1. Turbinenleitschaufel für einen Abgas-Turbolader, die folgendes aufweist:
ein Schaufelblatt (1) mit einer Vorderkantenfläche (4), einer Hinterkantenfläche (5) und ersten und zweiten Hauptoberflächen (2, 3), worin die erste und zweite Hauptoberfläche im Wesentlichen eben und parallel zueinander ausgebildet sind, und ein Schaufelschaft (6) das Schaufelblatt (1) trägt,
**dadurch gekennzeichnet, dass** der Winkel (β) der Hinterkantenfläche ungefähr 15° bis 70° beträgt relativ zu einer der Hauptoberflächen und etwa 165° bis 110° relativ zu der anderen der Hauptoberflächen.

2. Turbinenleitschaufel nach Anspruch 1, worin der Winkel der Hinterkantenfläche etwa 17° bis 40° beträgt, vorzugsweise bei 20° relativ zu einer der Hauptoberflächen liegt und 163° bis 140° ausmacht, vorzugsweise 160°, relativ zu der anderen der Hauptoberflächen.

3. Turbinenleitschaufel nach Anspruch 1, worin die Hinterkantenfläche einen Winkel (β) mit etwa 15° bis etwa 70° bildet, vorzugsweise 17° bis 40°, vorzugsweise um etwa 20° relativ zu der ersten Hauptoberfläche.

4. Turbinenleitschaufel nach Anspruch 3, worin die Vorderkantenfläche einen Winkel (α) von etwa 165° bis etwa 110° bildet, vorzugsweise bei 163° bis etwa 140° liegt, und besonders vorteilhaft bei 160° relativ zu der ersten Hauptoberfläche.

5. Turbinenleitschaufel nach Anspruch 3, worin die Vorderkantenfläche einen Wickel (α) von etwa 15° bis etwa 70° bildet, vorzugsweise 17° bis 40°, insbesondere etwa 20° relativ zu der zweiten Hauptoberfläche.

6. Turbinenleitschaufel nach Anspruch 1, worin die Hinterkantenfläche relativ zu der ersten Hauptfläche einen Winkel (β) von ungefähr 165° bis etwa 110°, vorzugsweise etwa 163° bis etwa 140° aufweist, am vorteilhaftesten um etwa 160° relativ zu der ersten Hauptfläche.

7. Turbinenleitschaufel nach Anspruch 3, worin die Vorderkantenfläche einen Winkel (α) von etwa 15° bis etwa 70° bildet, vorzugsweise 17° bis 40°, am vorteilhaftesten um 20° relativ zu der ersten Hauptfläche.

8. Turbinenleitschaufel nach Anspruch 1, worin die Flügelstreckung (Länge:Breite) des Schaufelblattes im Bereich von ungefähr 15:1 bis ca. 5:1 liegt.

9. Turbinenleitschaufel nach Anspruch 1, worin die Flügelstreckung (Länge:Breite) des Schaufelblattes von ca. 12:1 bis ca. 8:1 reicht.

10. Turbinenleitschaufel nach Anspruch 1, worin die Flügelstreckung (Länge:Breite) des Schaufelblattes bei ca. 10:1 liegt.

11. Turbinenleitschaufel nach Anspruch 1, worin das Schaufelblatt aus einem Streifen eines Metallbleches hergestellt ist.

12. Turbinenleitschaufel nach Anspruch 1, worin die Vorderkanten- und die Hinterkantenflächen annähernd parallel sind.

13. Turbinenleitschaufel nach Anspruch 1, worin die Vorderkanten- und die Hinterkantenflächen nicht parallel sind.

14. Turbinenleitschaufel nach Anspruch 1, worin die Vorderkanten- und die Hinterkantenfläche annähernd rechtwinklig zueinander stehen.

15. Turbinenleitschaufel nach einem der vorhergehenden Ansprüche zum Einsatz in einer Radial-Abgasturbolader-Turbine mit:
einem Laufrad (10);
einem Gehäuse, welches einen Strömungskanal um ein Laufrad definiert mit einem Einlass zur Aufnahme von Abgas aus einer Verbrennungskraftmaschine und einem Auslass stromabwärts des Laufrades,
einem Ring mit Leitschaufeln (1), welcher in dem Strömungskanal des Turbinengehäuses angeordnet ist, wobei jede Leitschaufel auf einem Schaft (6), der rotierend verstellbar im Gehäuse gelagert ist, angebracht ist, und
einem schwenkbaren Hebel, welcher an jedem verstellbaren Schaft angebracht ist, um eine Rotation des Schafts zu betätigen.

16. Turbinenleitschaufel nach einem der vorhergehenden Ansprüche zum Einsatz in einem Abgasturbolader für eine Verbrennungskraftmaschine, wobei der Abgasturbolader folgendes aufweist:
(a) eine Turbine mit Laufschaufeln, wobei die Laufschaufeln bei der Rotation einen Ringraum bestimmen,
(b) einen zumindest partiell radialen Turbinen-Leitschaufelring, der eine Vielzahl von in Umfangsrichtung beabstandeten Leitschaufeln aufweist, die durch ihre Größe, ihre Gestalt und ihre Positionierung bewirken, dass das Abgas dazwischen in einer Richtung strömt, wobei die Vielzahl der in Umfangsrichtung beabstandeten Leitschaufeln um eine Achse schwenkbar ist zwischen einer ersten Position und einer zweiten Position, wobei die erste Position eine Position ist, an der die abströmseitigen Kanten der Leitschaufeln an dem Ringraum liegen, welcher durch die Laufschaufeln definiert ist, die zweite Position eine Position ist, an der Leitschaufeln einander berühren und der Luftstrom zu dem Laufrad durch die Leitschaufeln blockiert ist.

17. Verfahren zur Herstellung eines Abgasturboladers, welches folgende Schritte beinhaltet:
(a) Bereitstellen eines Längsabschnitts eines Blechs,
(b) Abtrennen eines Blechsegments von dem Längsabschnitt des Blechs,
(c) Fixieren des Blechsegments an einem Schaft,
(d) Einführen des Schafts in eine passende Aufnahme eines Turbinengehäuses,
worin das Blechsegment ein Schaufelblatt einer Turbinenleitschaufel bildet entsprechend einem der Ansprüche 1 bis 15.

18. Verfahren zur Herstellung nach Anspruch 17, worin das Blech ein bandförmiges Halbzeug ist.

19. Verfahren nach Anspruch 18, worin das Blech-Segment an dem Schaft mittels Gasschweißen, Laserschweißen oder durch mechanische Mittel angebracht wird.

## Revendications

1. Aube directrice de turbine destinée à un turbocompresseur de gaz d'échappement, comprenant :
une aile (1) présentant une surface d'attaque (4), une surface de fuite (5) et des première (2) et seconde (3) surfaces principales, où lesdites première et seconde surfaces principales sont sensiblement planes et parallèles l'une à l'autre, et un arbre (6) portant l'aile (1),
**caractérisée en ce que** l'angle (β) de la surface de fuite est d'environ 15° à environ 70° par rapport à l'une desdites surfaces principales et d'environ 165° à environ 110° par rapport à l'autre desdites surfaces principales.

2. Aube directrice de turbine selon la revendication 1, dans laquelle l'angle de ladite surface de fuite est d'environ 17° à 40°, de préférence d'environ 20°, par rapport à l'une desdites surfaces principales et de 163° à 140°, de préférence d'environ 160°, par rapport à l'autre desdites surfaces principales.

3. Aube directrice de turbine selon la revendication 1, dans laquelle ladite surface de fuite forme un angle (β) d'environ 15° à environ 70°, de préférence de 17° à 40°, de la façon la plus préférée d'environ 20°, par rapport à ladite première surface principale.

4. Aube directrice de turbine selon la revendication 3, dans laquelle ladite surface d'attaque forme un angle (α) d'environ 165° à environ 110°, de préférence d'environ 163° à environ 140°, de la façon la plus préférée d'environ 160°, par rapport à ladite première surface principale.

5. Aube directrice de turbine selon la revendication 3, dans laquelle ladite surface d'attaque forme un angle (α) d'environ 15° à environ 70°, de préférence de 17° à 40°, de la façon la plus préférée d'environ 20°, par rapport à ladite seconde surface principale.

6. Aube directrice de turbine selon la revendication 1, dans laquelle ladite surface de fuite forme un angle (β) d'environ 165° à environ 110°, de préférence d'environ 163° à environ 140°, de la façon la plus préférée d'environ 160°, par rapport à ladite première surface principale.

7. Aube directrice de turbine selon la revendication 3, dans laquelle ladite surface d'attaque forme un angle (α) d'environ 15° à environ 70°, de préférence de 17° à 40°, de la façon la plus préférée d'environ 20°, par rapport à ladite première surface principale.

8. Aube directrice de turbine selon la revendication 1, dans laquelle le rapport de dimensions (longueur:largeur) de l'aile est d'environ 15:1 à environ 5:1.

9. Aube directrice de turbine selon la revendication 1, dans laquelle le rapport de dimensions (longueur:largeur) de l'aile est d'environ 12:1 à environ 8:1.

10. Aube directrice de turbine selon la revendication 1, dans laquelle le rapport de dimensions (longueur:largeur) de l'aile est d'environ 10:1.

11. Aube directrice de turbine selon la revendication 1, dans laquelle ladite aile est formée d'une bande de tôle de métal.

12. Aube directrice de turbine selon la revendication 1, dans laquelle lesdites surfaces d'attaque et de fuite sont approximativement parallèles.

13. Aube directrice de turbine selon la revendication 1, dans laquelle lesdites surfaces d'attaque et de fuite ne sont pas parallèles.

14. Aube directrice de turbine selon la revendication 1, dans laquelle lesdites surfaces d'attaque et de fuite sont approximativement perpendiculaires.

15. Aube directrice de turbine selon l'une des revendications précédentes, à utiliser dans une turbine de turbocompresseur de gaz d'échappement à écoulement radial comportant :
une roue de compresseur (10),
une enveloppe définissant un conduit d'écoulement autour de la roue de compresseur et comportant un orifice d'entrée destiné à recevoir le gaz d'échappement d'un moteur à combustion interne et un orifice de sortie en aval de ladite roue de compresseur,
une couronne d'aubes directrices (1) disposée dans le conduit d'écoulement de l'enveloppe de la turbine, chaque aube directrice étant montée sur un arbre de réglage rotatif (6) supporté dans l'enveloppe, et
un levier pivotant fixé à chaque arbre de réglage pour actionner la rotation de l'arbre.

16. Aube directrice de turbine selon l'une des revendications précédentes, à utiliser dans un turbocompresseur de gaz d'échappement destiné à un moteur à combustion interne, ledit turbocompresseur de gaz d'échappement comprenant :
(a) une turbine comportant des pales tournantes, lesdites pales tournantes définissant un volume cylindrique lorsqu'elles tournent,
(b) un anneau de tuyère de turbine à écoulement au moins partiellement radial, comprenant une pluralité d'aubes directrices espacées circonférentiellement dimensionnées, formées et positionnées pour amener le gaz d'échappement à s'écouler entre elles dans un sens, ladite pluralité d'aubes directrices circonférentiellement espacées pouvant pivoter autour d'un axe entre une première position et une seconde position, la première position étant une position à laquelle les bords en aval des aubes directrices sont situés sur ledit volume cylindrique défini par lesdites pales tournantes, la seconde position étant une position à laquelle les aubes directrices se touchent les unes les autres et l'écoulement de l'air vers la roue de compresseur est bloqué par lesdites aubes directrices.

17. Procédé de fabrication d'un turbocompresseur de gaz d'échappement, où ledit procédé comprend :
(a) l'obtention d'une longueur de tôle de métal,
(b) la séparation d'un segment de tôle de métal de ladite longueur de tôle de métal,
(c) la fixation dudit segment de la tôle de métal sur un arbre,
(d) l'introduction dudit arbre dans un réceptacle correspondant d'une enveloppe de turbine,
dans lequel ledit segment de la tôle de métal forme une aile d'une aube directrice de turbine comme dans l'une des revendications 1 à 15.

18. Procédé de fabrication selon la revendication 18, dans lequel ladite tôle de métal est une barre.

19. Procédé selon la revendication 18, dans lequel ledit segment de la tôle de métal est fixé audit arbre par soudage au gaz, soudage au laser, ou par un moyen mécanique.
